# EUROPÄISCHE PATENTSCHRIFT

(11) **EP 3 482 859 B1**
(45) Veröffentlichungstag und Bekanntmachung des Hinweises auf die Patenterteilung: **31.03.2021**
(21) Anmeldenummer: 18199129.0
(22) Anmeldetag: 08.10.2018
(51) Int. Cl.: B23D 59/00, B23D 55/00, B23Q 17/24, B23D 53/00

(54) **SYSTEM FÜR EINEN OPTIMIERTEN BETRIEB EINER WERKZEUGMASCHINE**
SYSTEM FOR THE OPTIMAL OPERATION OF A MACHINE TOOL
SYSTÈME PERMETTANT UN FONCTIONNEMENT OPTIMISÉ D'UNE MACHINE-OUTIL

(30) Priorität: 10.11.2017 DE 102017126434
(43) Veröffentlichungstag der Anmeldung: 15.05.2019
(73) Patentinhaber: KEURO Besitz GmbH & Co. EDV-Dienstleistungs KG, 77855 Achern (DE)
(72) Erfinder: Stolzer, Armin, 76530 Baden-Baden (DE); Krebber, Sönke Florian, 76530 Baden-Baden (DE)
(74) Vertreter: Lemcke, Brommer & Partner Patentanwälte Partnerschaft mbB

(56) Entgegenhaltungen:
- EP-A1- 1 884 325
- EP-A2- 0 230 642
- WO-A2-2006/104929
- DE-U1- 20 108 500
- DE-U1-202016 106 787
- US-A- 4 896 273
- US-A1- 2003 220 809
- US-A1- 2012 303 674

## Beschreibung

Die Erfindung betrifft ein System für einen optimierten Betrieb einer Werkzeugmaschine, insbesondere einer Sägemaschine, nach dem Oberbegriff des Anspruchs 1.

Ein solches System ist aus US 2012/303674 A1 bekannt.

Werkzeugmaschinen der vorliegenden Art enthalten demnach ein Werkzeug, das Metall auf spanende Weise bearbeitet. Dieses Werkzeug ist Verschleiß unterworfen und muss von Zeit zu Zeit ersetzt werden. Ferner ist es üblich, unterschiedliche Werkzeuge in die Werkzeugmaschine einsetzen zu können, um zum Beispiel bei Sägemaschinen unterschiedliche Materialien zu bearbeiten oder zum Beispiel bei Bohrmaschinen unterschiedlich große Bohrungen herzustellen.

Abhängig vom aktuellen Werkzeug sowie gegebenenfalls vom Material des aktuell bearbeiteten Werkstücks, müssen unterschiedliche Bewegungsabläufe der Werkzeugmaschine gewählt werden, um einerseits das Werkzeug nicht überzubeanspruchen oder ein schlechtes Arbeitsergebnis zu erhalten und andererseits die Bearbeitungsdauern so kurz wie möglich zu halten, um die Leistung der Werkzeugmaschine zu optimieren. Eine Bandsägemaschine beispielsweise umfasst eine Antriebsvorrichtung, die mindestens einen Motor zum Antrieb des umlaufenden Sägebands, also des Werkzeugs, einen Motor zum Bewegen des umlaufenden Sägebands relativ zum Werkstück für den Sägefortschritt sowie in der Regel Motoren zum Bewegen und Festsetzen des Werkstücks in der Werkzeugmaschine umfasst. Eine Kreissägemaschine beispielsweise weist ebenfalls eine Antriebsvorrichtung mit getrennten Antrieben für die Rotation des Sägeblatts als Werkzeug sowie für die Bewegung des rotierenden Sägeblatts relativ zum Werkstück auf.

Zumindest der Motor zum Antreiben des Werkzeugs und der Motor zum Bewegen des Werkzeugs müssen mit einem Prozessdatensatz gesteuert oder geregelt werden, der insbesondere werkzeugspezifisch, also angepasst an das aktuell vorhandene Werkzeug gewählt werden muss, um einerseits das Werkzeug nicht überzubelasten und andererseits die Leistungsfähigkeit der Werkzeugmaschine auszunutzen. Zu diesem Zweck stellen üblicherweise entweder der Maschinenhersteller oder der Werkzeughersteller werkzeugspezifische Prozessdatensatzvorgaben zur Verfügung, gegebenenfalls differenziert nach unterschiedlichen Werkstückmaterialien. Diese Prozessdatensatzvorgaben beruhen auf Erfahrungswerten, die in Testdurchläufen gewonnen wurden. Der Maschinenbediener kann diese Prozessdatensatzvorgaben aus Listen entnehmen, die entweder im Betrieb vorgehalten oder insbesondere via Internet beim Werkzeughersteller oder Maschinenhersteller abrufbar sind.

Die Kommunikationseinrichtung einer Werkzeugmaschine der vorliegenden Art wird in der Regel zum Datenaustausch zwischen der Steuerungseinrichtung und einem Computer eines Servicetechnikers verwendet, so dass der Servicetechniker sich zu Wartungszwecken oder zur Beseitigung einer Störung auf die Steuerungseinrichtung aufschalten kann, um die notwendigen Arbeiten per Fernwartung durchführen zu können.

Nach einem Werkzeugwechsel oder beim Wechsel des zu bearbeitenden Materials muss demnach der Maschinenbediener neue werkzeugspezifische Prozessdatensatzvorgaben in die Steuerungseinrichtung der Werkzeugmaschine eingeben, um einen optimierten Betrieb derselben zu gewährleisten. Unterbleibt dies oder wird dies fehlerhaft vorgenommen, kann dies zum einen unnötig lange Bearbeitungszeiten zur Folge haben, oder zum anderen zu schlechten Arbeitsergebnissen führen oder gar eine Beschädigung des Werkzeugs zur Folge haben.

Der vorliegenden Erfindung liegt daher die Aufgabe zugrunde, ein System für einen optimierten Betrieb einer Werkzeugmaschine vorzuschlagen, mit dem die genannte Fehlerquelle beseitigt ist.

Gelöst ist diese Aufgabe durch ein System zum optimierten Betrieb einer Werkzeugmaschine mit den Merkmalen des Anspruchs 1. Vorteilhafte Ausgestaltungen des erfindungsgemäßen Systems sind in den Ansprüchen 2 bis 5 niedergelegt.

Die Werkzeugmaschine mit einem Werkzeug zur spanenden Metallbearbeitung, einer Antriebsvorrichtung zum Antreiben und/oder Bewegen des Werkzeugs, einer Steuerungseinrichtung für die Antriebsvorrichtung, um die Antriebsvorrichtung mit einem Prozessdatensatz zu steuern und/oder zu regeln, sowie mit einer Kommunikationseinrichtung zeichnet sich also dadurch aus, dass die Steuerungseinrichtung Erkennungsmittel zum Identifizieren des Werkzeugs umfasst. Die erfindungsgemäße Werkzeugmaschine kann also selbstständig erkennen, welches Werkzeug für den aktuellen Arbeitsgang vorhanden ist. Damit ist eine Hauptfehlerquelle beseitigt, da der Bediener an der Bedienungsoberfläche der Steuerungseinrichtung die Information erhält, welches Werkzeug aktuell eingelegt ist.

Hierfür kann das Werkzeug mit einer Codierung versehen sein, wobei dann die erfindungsgemäßen Erkennungsmittel der Steuerungseinrichtung im Wesentlichen aus mindestens einem Sensor zum Erfassen der Codierung bestehen. Diese Codierung kann eine Nummer, ein Barcode, ein Matrix-Code, ein RFID-Chip und dergleichen mehr sein. Diese Codierungen haben gemeinsam, dass sie mit kontaktlosen Sensoren erfasst werden können.

Wenn die Werkzeugmaschine beispielsweise eine Bandsägemaschine ist, kann der Code als insbesondere Barcode mittels Lasergravur oder mittels eines Aufdrucks auf dem Sägeband aufgebracht sein. Ein einziger langsamer Umlauf dieses Sägebands kann nach einem Werkzeugwechsel gewährleisten, dass der Code vom entsprechenden Sensor gelesen wird.

Wenn die Werkzeugmaschine eine Kreissäge ist, kann das Werkzeug, dort das Sägeblatt, ebenso mit einem Code versehen sein. Hier ist es jedoch auch problemlos möglich, den Code als RFID-Chip auszugestalten und auf das Sägeblatt aufzubringen.

Die Codierung kann auch solcherart ausgestaltet sein, dass sie die werkzeugspezifischen Prozessdatensatzvorgaben maschinenlesbar enthält, was beispielsweise mit einem Matrixcode möglich ist. Die Erkennungsmittel der Steuerungseinrichtung können dann nicht nur das Werkzeug identifizieren, sondern auch gleich die werkzeugspezifischen Prozessdatensatzvorgaben in die Steuerungseinrichtung einlesen. Ein Eingriff des Bedieners ist in diesem Fall nicht notwendig, so dass hier jegliche Fehlerquelle eliminiert ist.

Besonders bevorzugt ist es jedoch, wenn die Werkzeugmaschine eine Steuerungseinrichtung mit einer Abgleicheinheit besitzt, die über die Kommunikationseinrichtung zum Datenaustausch zwischen der Steuerungseinrichtung und einem externen Datenspeicher bzw. Computer mit diesem Datenspeicher und/oder diesem Computer Kontakt aufnimmt, um im Datenspeicher und/oder Computer hinterlegte, werkzeugspezifische Prozessdatensatzvorgaben für das identifizierte Werkzeug abzurufen und/oder den aktuellen Prozessdatensatz mit im Datenspeicher und/oder Computer hinterlegten, werkzeugspezifischen Prozessdatensatzvorgaben für das identifiziert Werkzeug abzugleichen.

Die Erkennungsmittel der Steuerungseinrichtung einer Werkzeugmaschine müssen dann tatsächlich nur das Werkzeug identifizieren, zum Beispiel anhand einer Identifikationsnummer, worauf sich die Steuerungseinrichtung mit ihrer Abgleicheinheit über die Kommunikationseinrichtung aus einem externen Datenspeicher und/oder einem externen Computer werkzeugspezifische Prozessdatensatzvorgaben beschafft und sogleich in den eigenen Arbeitsspeicher einliest um den Bearbeitungsvorgang optimiert durchführen zu können. Auch hier entfällt jeglicher Eingriff des Bedieners, so dass auch hier die entscheidende Fehlerquelle eliminiert ist.

Der externe Datenspeicher, auf den die Steuerungseinrichtung der Werkzeugmaschine zugreift, um werkzeugspezifische Prozessdatensatzvorgaben abzurufen oder einen Abgleich durchzuführen, muss kein einzelner, abgegrenzter Datenspeicher sein. Es kann vielmehr vorgesehen sein, dass der externe Datenspeicher durch die Gesamtheit der im Internet zu findenden Informationen gebildet wird. Hierbei muss dann die Kommunikationseinrichtung so ausgebildet sein, dass sie die erforderlichen Informationen selbständig via Internet ermittelt, beispielsweise anhand einer Liste von einschlägigen Herstellern oder mit Hilfe von Internet-Suchmaschinen.

Ein solch selbständiger Abgleich mit im Internet aktuell verfügbaren Informationen kann auch dann zu besseren Ergebnissen führen, wenn der Zugriff auf die im Internet erhältlichen Informationen ergänzend und zusätzlich zum Abrufen von werkzeugspezifischen Prozessdatensatzvorgaben von extern erfolgen.

Nach einer weiteren bevorzugten Ausgestaltung der Werkzeugmaschine enthält die Steuerungseinrichtung maschinenspezifische Korrekturwerte für zumindest einzelne werkzeugspezifische Prozessdatensatzvorgaben, um die werkzeugspezifischen Prozessdatensatzvorgaben an die Werkzeugmaschine anzupassen.

Dies ist insbesondere dann von großem Vorteil, wenn die Werkzeugmaschine mit Prozessdatensätzen betrieben werden kann, die gegenüber den Prozessdatensatzvorgaben kürzere Bearbeitungszeiten ermöglichen. Dies ist bei besonders leistungsfähigen Werkzeugmaschinen des Öfteren der Fall, da Werkzeughersteller werkzeugspezifische Prozessdatensatzvorgaben herausgeben, die auch für leistungsschwächere Werkzeugmaschinen passen müssen. Beim Beispiel einer Bandsägemaschine kann es sich hierbei beispielsweise um die Vibrationen des Sägebands beim Sägevorgang handeln: Eine leitungsfähige Bandsägemaschine, die einen Sägevorgang mit besonders geringen Vibrationen des Sägebands durchführt, kann mit höheren Schnittgeschwindigkeiten betrieben werden als eine weniger leistungsfähige Sägebandmaschine mit demselben Werkzeug.

Die Steuerungseinrichtung der Werkzeugmaschine kann auch einen Algorithmus enthalten, der das von der Werkzeugmaschine zu bearbeitende Material erkennen kann, indem mittels Sensoren und/oder aus Rückmeldungen der Antriebsvorrichtung während eines Probebetriebs Prozessparameter ermittelt werden, die auf das Material schließen lassen. Dies kann das beim Bearbeiten des Werkstücks auf das Werkzeug aufgebrachte Drehmoment oder eine entsprechende Gegenkraft sein, gegebenenfalls in Verbindung mit Geometriedaten, Informationen über das Gewicht des Werkstücks sowie, zum Beispiel bei einer Bandsägemaschine, die beim Sägen auftretenden Vibrationen des Sägebands und dergleichen mehr.

Nach dieser Weiterbildung der Werkzeugmaschine erkennt diese sowohl das eingelegte Werkzeug als auch das zu bearbeitende Material selbstständig und kann gegebenenfalls über die Kommunikationseinrichtung ebenfalls selbständig werkzeugspezifische Prozessdatensatzvorgaben abrufen und diese mit materialspezifischen Korrekturwerten sowie gegebenenfalls auch mit maschinenspezifischen Korrekturwerten modifizieren, um einen optimierten Prozessdatensatz zu erstellen, mit dem die Antriebsvorrichtung der Werkzeugmaschine dann gesteuert bzw. geregelt wird. Der Maschinenbediener muss sich in diesem Fall um nichts kümmern und entsprechende Fehlerquellen sind vollständig eliminiert.

Das erfindungsgemäße System für einen optimierten Betrieb einer Werkzeugmaschine, die mit Erkennungsmitteln zum Identifizieren des Werkzeugs versehen ist, umfasst neben der Werkzeugmaschine mit einem Werkzeug zur zerspanenden Metallbearbeitung, mit einer Antriebsvorrichtung zum Antreiben und/oder Bewegen des Werkzeugs, und mit einer Steuerungseinrichtung für die Antriebsvorrichtung zum Steuern und/oder Regeln derselben mit einem Prozessdatensatz, weiterhin mindestens einen externen Computer und/oder mindestens einen externen Datenspeicher sowie eine Kommunikationseinrichtung zum Datenaustausch zwischen der Steuerungseinrichtung der Werkzeugmaschine und dem externen Datenspeicher und/oder dem externen Computer. Erfindungsgemäß enthält die Steuerungseinrichtung der Werkzeugmaschine eine Abgleicheinheit, um im Datenspeicher und/oder Computer hinterlegte, werkzeugspezifische Prozessdatensatzvorgaben für das Werkzeug abzurufen und/oder den aktuellen Prozessdatensatz mit im Datenspeicher und/oder Computer hinterlegten, werkzeugspezifischen Prozessdatensatzvorgaben für das Werkzeug abzugleichen.

Das System aus einer Werkzeugmaschine, die beim Anwender steht, und aus mindestens einem externen Computer bzw. mindestens einem externen Datenspeicher kann beispielsweise so aufgebaut sein, dass ein externer Computer bzw. Datenspeicher beim Maschinenhersteller und ein Computer bzw. Datenspeicher beim Werkzeughersteller lokalisiert sind und alle diese Komponenten miteinander vernetzt sind, insbesondere über das Internet.

Die Kommunikation zwischen der Steuerungseinrichtung der Werkzeugmaschine und dem externen Computer bzw. Datenspeicher ermöglicht diverse Interaktionen. So können maschinenspezifische Korrekturwerte für zumindest einzelne werkzeugspezifische Prozessdatensatzvorgaben, um die werkzeugspezifischen Prozessdatensatzvorgaben an die Werkzeugmaschine anzupassen, nicht nur wie oben beschrieben in der Steuerungseinrichtung der Werkzeugmaschine selbst vorgehalten werden, sondern auch im externen Computer bzw. Datenspeicher. Dies ermöglicht insbesondere eine dynamische Weiterentwicklung dieser Korrekturwerte, wenn es beispielsweise beim Maschinenhersteller neue Erkenntnisse gibt, mit denen die Prozessdatensätze für bestimmte Werkzeugmaschinen weiter optimiert werden können.

Erfindungsgemäß enthält die Steuerungseinrichtung der Werkzeugmaschinen einen Algorithmus, der während des Betriebs der Werkzeugmaschine maschinenspezifische und/oder materialspezifische Korrekturwerte für die werkzeugspezifischen Prozessdatensatzvorgaben ermittelt. Dies kann automatisch anhand während des Betriebs ermittelter Prozessparameter geschehen, die mit Sensoren und/oder aus Rückmeldungen der Antriebsvorrichtung ermittelt werden. Alternativ oder ergänzend können auch Bedienereingaben, beispielsweise zum bearbeiteten Material oder zum Arbeitsergebnis, Grundlage für den Algorithmus sein, der daraus maschinenspezifische und/oder materialspezifische Korrekturwerte ermittelt.

Mittels der Abgleicheinheit der Steuerungseinrichtung gibt die Werkzeugmaschine die vom Algorithmus errechneten maschinenspezifischen und/oder materialspezifischen Korrekturwerte an den externen Datenspeicher und/oder den externen Computer aus, so dass dort die werkzeugspezifischen Prozessdatensatzvorgaben maschinenspezifisch modifiziert werden können. Es handelt sich somit um ein selbstlernendes System, das die werkzeugspezifischen Prozessdatensatzvorgaben maschinenspezifisch laufend optimiert.

Ganz besonders vorteilhaft ist es hierbei, wenn eine Mehrzahl von typgleichen Werkzeugmaschinen mit ein und demselben externen Datenspeicher und/oder externen Computer kommunizieren. Denn wenn der Datenspeicher und/oder Computer so ausgebildet sind, dass sie die hinterlegten, werkzeugspezifischen Prozessdatensatzvorgaben anhand von den Werkzeugmaschinen erhaltenen Rückmeldungen maschinenspezifisch anpassen, insbesondere unter Verwendung statistischer Methoden, werden die werkzeugspezifischen Prozessdatensatzvorgaben laufend optimiert, so dass zum Beispiel Korrekturwerte einer Werkzeugmaschine, die zum Optimieren der werkzeugspezifischen Prozessdatensatzvorgaben genutzt werden, automatisch allen anderen, typgleichen Werkzeugmaschinen zur Verfügung gestellt werden. Darüber hinaus ergibt sich ein selbstlernender Effekt mit einer Vielzahl von Daten, deren Streuung entsprechend ausgewertet und in die Optimierung der werkzeugspezifischen Prozessdatensatzvorgaben einfließen kann. Es handelt sich somit um einen laufend fortgeschriebenen Echtzeit-Feldversuch, der die werkzeugspezifischen Prozessdatensatzvorgaben dynamisch anpasst, so dass diese mit zunehmender verarbeiteter Datensatzmenge maschinenspezifisch immer besser werden.

Nicht erfindungsgemäß kann es vorgesehen sein, eine Steuerungseinrichtung der Werkzeugmaschine ohne Algorithmus zu verwenden, sondern nur die Prozessparameter, die mit Sensoren und/oder aus Rückmeldungen der Antriebsvorrichtung während des Betriebs der Werkzeugmaschine ermittelt werden und/oder Bedienereingaben während des Betriebs der Werkzeugmaschine an den Datenspeicher und/oder den Computer zu melden, und im Datenspeicher und/oder Computer einen Algorithmus vorzusehen, der aus diesem rückgemeldeten Prozessparametern materialspezifische Korrekturwerte für die werkzeugspezifischen Prozessdatensatzvorgaben errechnet, um die werkzeugspezifischen Prozessdatensatzvorgaben maschinenspezifisch zu modifizieren. Solche Prozessparameter können beispielsweise bei Bandsägemaschinen die Schnittgeschwindigkeit, die auftretenden Vibrationen, der Bandverlauf beim Sägen sowie auch die Standzeit des Sägebands sein.

Auch bei dieser Variante ergibt sich ein System, das sich fortlaufend optimiert, indem eine Art dynamische Datenbank für die werkzeugspezifischen Prozessdatensatzvorgaben erzeugt wird, die sich aufgrund der von einer Vielzahl von typgleichen Werkzeugmaschinen erhaltenen Rückmeldungen laufend verbessert.

Bevorzugterweise handelt es sich bei dieser Weiterbildung des erfindungsgemäßen Systems um eine Beziehung dreier unterschiedlicher Teilnehmer: Der externe Datenspeicher, der insbesondere beim Werkzeughersteller vorgehalten werden kann, enthält die werkzeugspezifischen Prozessdatensatzvorgaben, während der externe Computer, der insbesondere beim Maschinenhersteller steht, maschinenspezifische und/oder materialspezifische Korrekturwerte für die im externen Datenspeicher vorgehaltenen werkzeugspezifischen Prozessdatensatzvorgaben enthält und laufend optimiert, indem die von den Werkzeugmaschinen erhaltenen Rückmeldungen zur laufenden maschinenspezifischen Anpassung der Korrekturwerte, insbesondere unter Verwendung statistischer Methoden benutzt werden, während umgekehrt die so laufend optimierten maschinenspezifischen und/oder materialspezifischen Korrekturwerte der Abgleicheinheit der Steuerungsvorrichtung jeder einzelnen Werkzeugmaschine zur Verfügung gestellt werden.

Schließlich kann im Rahmen des erfindungsgemäßen Systems vorgesehen sein, dass der Datenspeicher und/oder Computer einen Algorithmus enthalten, der aus Prozessparametern, die er von der Werkzeugmaschine gemeldet bekommt, auf das von der Werkzeugmaschine zu bearbeitende Material schließt und die werkzeugspezifischen Prozessdatensatzvorgaben selbständig mit materialspezifischen Korrekturwerten anpasst. Diese Prozessparameter werden in der Werkzeugmaschine während des Betriebs oder während eines Probebetriebs von der Steuerungseinrichtung ermittelt, und zwar mittels Sensoren und/oder aus Rückmeldungen der Antriebsvorrichtung, wie beispielsweise dem für eine bestimmte Vorschubbewegung und eine bestimmte Antriebsgeschwindigkeit notwendigen Antriebsdrehmoment. In einem solchen System muss sich der Bediener der Werkzeugmaschine wiederum um nichts selbst kümmern, da die Werkzeugmaschine sowohl das Werkzeug als auch das Material erkennt bzw. erkennen lässt, und zwar durch Kommunikation mit dem externen Computer bzw. Datenspeicher. Letzteres hat den Vorteil, dass eine Werkzeugmaschine nicht selbst mit einem entsprechenden Algorithmus ausgerüstet oder nachgerüstet werden muss. Es reicht eine Kommunikationseinrichtung zum Datenaustausch zwischen der Steuerungseinrichtung der Werkzeugmaschine und dem externen Datenspeicher bzw. Computer.

Ein Ausführungsbeispiel für ein erfindungsgemäß ausgebildetes System für einen optimierten Betrieb einer Werkzeugmaschine wird im Folgenden anhand einer Bandsägemaschine näher beschrieben und erläutert. Es zeigen:
- Figur 1: eine schematische Darstellung der funktionswesentlichen Teile eines erfindungsgemäß ausgebildeten Systems;
- Figur 2: ein Flussdiagram für den Funktionsablauf im System gemäß Figur 1;
- Figur 3: ein Schema des Datentransfers im System nach Figur 1;
- Figur 4: Code-Beispiel für den Datentransfer nach Figur 3.

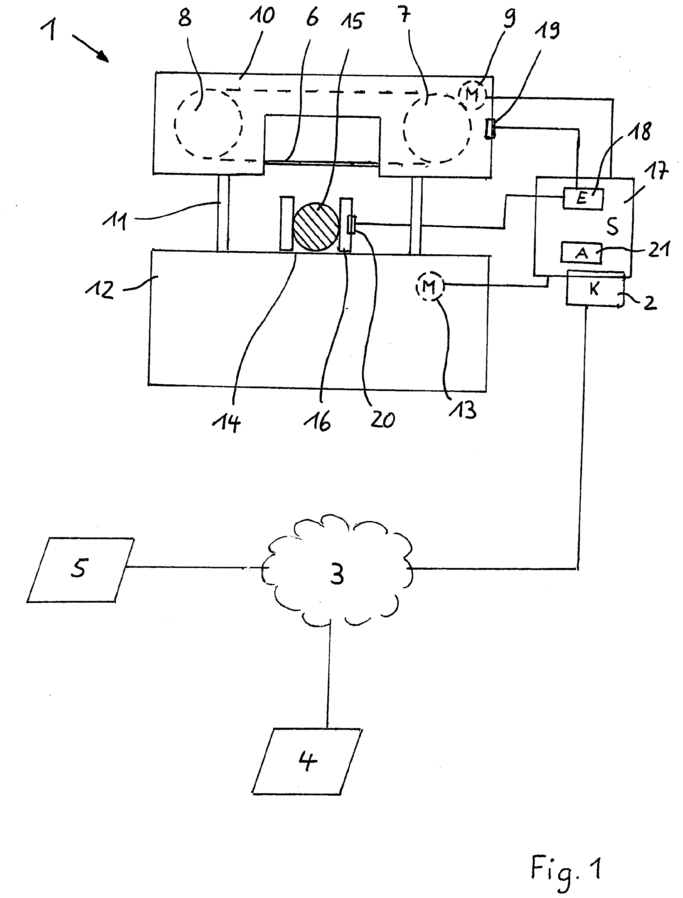

In Figur 1 ist schematisch ein System für einen optimierten Betrieb einer Werkzeugmaschine dargestellt, das eine mögliche Ausgestaltung der Erfindung verkörpert. Eine Werkzeugmaschine 1, hier eine Bandsägemaschine, steht beim Anwender und ist dort in Betrieb. Über eine Kommunikationseinrichtung 2, beispielsweise einen Router, kann sich die Werkzeugmaschine 1 über das Internet 3 mit einem externen Computer 4, der beim Hersteller der Werkzeugmaschine steht, und mit einem externen Datenspeicher 5 verbinden. Letzterer befindet sich beim Hersteller des Werkzeugs 6 zur spanenden Metallbearbeitung, vorliegend also des Sägebands der Bandsägemaschine.

Die als Bandsägemaschine ausgestaltete Werkzeugmaschine 1 enthält, wie erwähnt, als spanabhebendes Werkzeug 6 ein Sägeband, das um eine angetriebene Laufrolle 7 und eine mitlaufende Laufrolle 8 umläuft. Hierzu wird die Laufrolle 7 von einem Antriebsmotor 9 angetrieben.

Das Sägeband und die beiden Laufrollen 7, 8 sind in einem Sägenoberteil 10 angeordnet. Dieses kann entlang von zwei Säulen 11 auf ein Sägenunterteil 12 abgesenkt werden, um das Werkzeug 6, also das Sägeband in einer Sägevorschubbewegung zu bewegen. Hierzu enthält die Maschine einen Vorschubmotor 13. Auf der Oberseite des Sägenunterteils 12, die einen Sägetisch 14 bildet, liegt ein zu sägendes Werkstück 15 auf. Dieses wird von zwei Spannbacken 16 in Position gehalten. Durch ein Absenken des Sägenoberteils 10 bewegt sich das Sägeband zum Werkstück 15 hin und letztlich durch dieses hindurch bis zum Sägentisch 14.

Der Antriebsmotor 9 zum Antreiben des Werkzeugs 6 und der Vorschubmotor 13, der zum Bewegen des Werkzeugs 6 in einer Sägevorschubbewegung dient, werden von einer Steuerungseinrichtung 17 gesteuert, die in der Regel in das Gehäuse der Werkzeugmaschine 1 integriert ist und einen Steuerungsrechner mit entsprechender Steuerungssoftware umfasst. Erfindungsgemäß enthält diese Steuerungseinrichtung 17, beispielsweise als Softwaremodul, Erkennungsmittel 18, die vorliegend auch zwei Sensoren, einen Sensor 19 zum Erfassen einer Codierung des Werkzeugs 6 und einen Sensor 20 zum Erfassen einer Codierung am Werkstück 15 umfasst. Das Erkennungsmittel 18 der Steuerung 17 ist außerdem mit dem Antriebsmotor 9, genauer mit dessen Frequenzumrichter verbunden, um laufend Informationen über das vom Antriebsmotor 9 an die angetriebene Laufrolle 7 und somit an das Werkzeug 6 abgegebene Drehmoment zu sammeln, beispielsweise mittels Analysieren des vom Frequenzumrichter abgegebenen Wirkstroms. Diese Daten werden mit den Steuerungsdaten für den Vorschubmotor 13 verknüpft, was Rückschlüsse darauf zulässt, ob die Geschwindigkeit des Sägevorschubs optimal ist oder erhöht werden kann bzw. verringert werden sollte, um das Werkzeug nicht zu stark zu belasten.

Das Werkzeug 6 ist mit einem Barcode versehen, der in das Sägeband eingelasert ist. Mit dem Sensor 19 kann dieser Barcode eingelesen werden, sobald er den Sensor 19 passiert. Auch das Werkstück 15 ist codiert; hier handelt es sich um einen QR-Code, der vom Sensor 20, der in der Nähe der Spannbacken 16 angeordnet ist, eingelesen werden kann. In diesem QR-Code kann bereits die Information stecken, die von der Steuereinrichtung 17 verwendet werden kann, um ein angepasstes Steuerprogramm abzuarbeiten oder das Steuerprogramm materialspezifisch anzupassen, mit dem die Antriebs- und Vorschubmotoren 9, 13 angesteuert werden. Bevorzugt ist es jedoch, wenn die Steuereinrichtung 17 aufgrund des erkannten QR-Codes über die Kommunikationseinrichtung 2 Informationen aus dem Internet, oder via Internet 3 weitere Informationen vom externen Computer 4 oder dem externen Datenspeicher 5 beschafft, mit denen ein Sägeschnitt mit optimierten Parametern für den Antriebsmotor 9 und den Vorschubmotor 13 durchgeführt wird.

In entsprechender Weise ist es bevorzugt, wenn die Steuervorrichtung 17 anhand der vom Sensor 19 detektierten Codierung des Werkzeugs 6 über die Kommunikationseinrichtung 2 aktuelle Daten aus dem Internet 3, dem Datenspeicher 5 oder dem Computer 4 anfordert, mit denen der Sägevorgang optimiert werden kann, beispielsweise über die optimale Bandspannung des als Sägeband ausgebildeten Werkzeugs 6 und insbesondere die optimale Umlaufgeschwindigkeit und, damit zusammenhängend, die optimale bzw. noch verträgliche Sägevorschubgeschwindigkeit.

Eine Abgleicheinheit 21, die in der Regel in die Steuerungseinrichtung 17 integriert ist und insbesondere als Softwaremodul ausgebildet sein kann, sorgt für einen aktuellen Abgleich der über die Kommunikationseinrichtung 2 erhaltenen Prozessdatensatzvorgaben mit dem in der Steuerungseinrichtung 17 bereits vorhandenen Prozessdatensatz, mit dem diese die Antriebs- und Vorschubmotoren 9, 13 steuert.

Gleichzeitig kann die Steuerungseinrichtung 17 mit der Abgleicheinheit 21 über die Kommunikationseinrichtung 2 Rückmeldung an den externen Computer 4 und/oder den externen Datenspeicher 5 geben, beispielsweise über die laufend ermittelten Werte des vom Antriebsmotor 9 an das Werkzeugs 6 abgegebenen Drehmoments, das direkt mit der momentanen Schnittleistung im Material des Werkstücks 15 zusammenhängt. Diese rückgemeldeten Daten sind für den Hersteller der Werkzeugmaschine 1 sowie auch für den Hersteller des Werkzeugs 6 eine wertvolle Grundlage, um die material-, werkzeug- und maschinenspezifischen Prozessdatensatzvorgaben laufend zu optimieren.

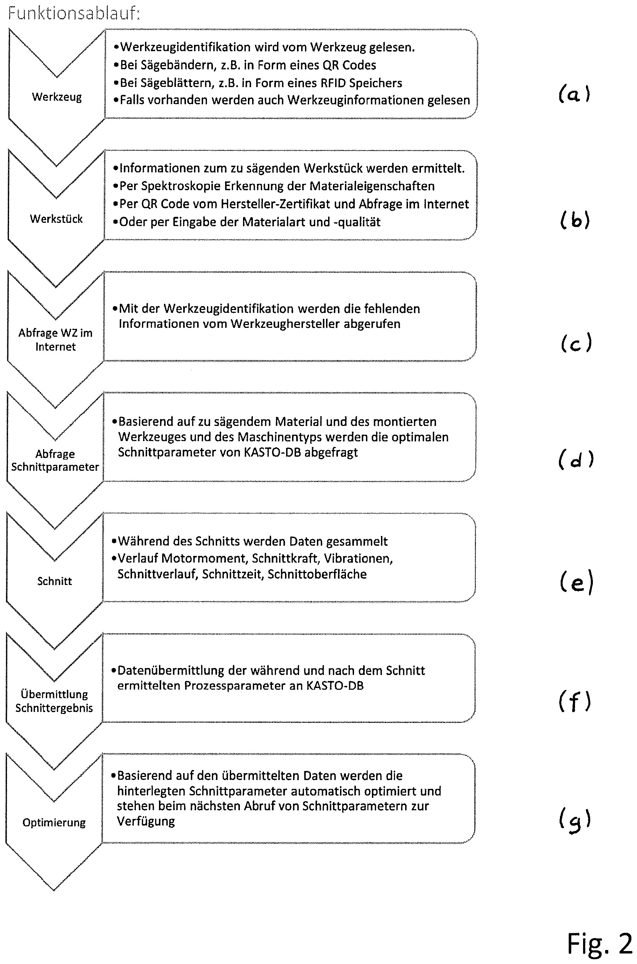

Die Figur 2 ist ein Flussdiagramm für einen beispielhaften Funktionsablauf des in Figur 1 schematisch dargestellten Systems. Im Schritt (a) wird das Werkzeug 6 identifiziert, und zugehörige Informationen werden gegebenenfalls vom Sensor 19 des Erkennungsmittels 18 in die Steuerungseinrichtung 17 eingelesen.

Im Schritt (b) werden Informationen zum zu sägenden Werkstück 15 ermittelt, und zwar insbesondere über den Sensor 20 des Erkennungsmittels 18. Hierbei wird das Werkstück 15 identifiziert und/oder werden bereits materialspezifische Informationen in die Steuerungseinrichtung 17 eingelesen.

Im Schritt (c) verbindet sich die Steuerungseinrichtung 17 über die Kommunikationseinrichtung 2 mit dem externen Datenspeicher 5 beim Werkzeughersteller und beschafft sich weitere Informationen zum Werkzeug 6.

Im Schritt (d) verbindet sich die Steuerungseinrichtung 17 mittels der Kommunikationseinrichtung 2 über das Internet 3 mit dem externen Computer 4 beim Hersteller der Werkzeugmaschine 1, um mit den gegebenenfalls ergänzten Informationen zum Werkzeug 6 und zum zu sägenden Werkstück 15 einen optimalen Prozessdatensatz zu beschaffen, insbesondere zur Steuerung des Antriebsmotors 9 und des Vorschubmotors 13.

Im Schritt (e) werden während des Sägeschnitts Daten gesammelt, insbesondere über das Drehmoment, das der Antriebsmotor 9 an das Werkzeug 6 abgibt, über die Schnittkraft, die auf das Werkzeug 6 einwirkt, über Vibrationen, über einen möglichen Schnittverlauf, über die Schnittzeit sowie im Ergebnis auch über die Schnittoberfläche.

Während und nach dem erfolgten Sägeschnitt werden im Schritt (f) Daten zu den im Schritt (e) ermittelten Prozessparametern an den externen Computer 4 des Herstellers der Werkzeugmaschine 1 übermittelt.

Im Schritt (g) werden schließlich beim Hersteller der Werkzeugmaschine 1 die Prozessdatensatzvorgaben aufgrund der Rückmeldungen optimiert. Da in der Regel Rückmeldungen von einer Vielzahl typgleicher Werkzeugmaschinen beim Hersteller eintreffen, kann diese Optimierung unter Verwendung statistischer Methoden erfolgen und beim nächsten Abruf zur Verfügung stehen.

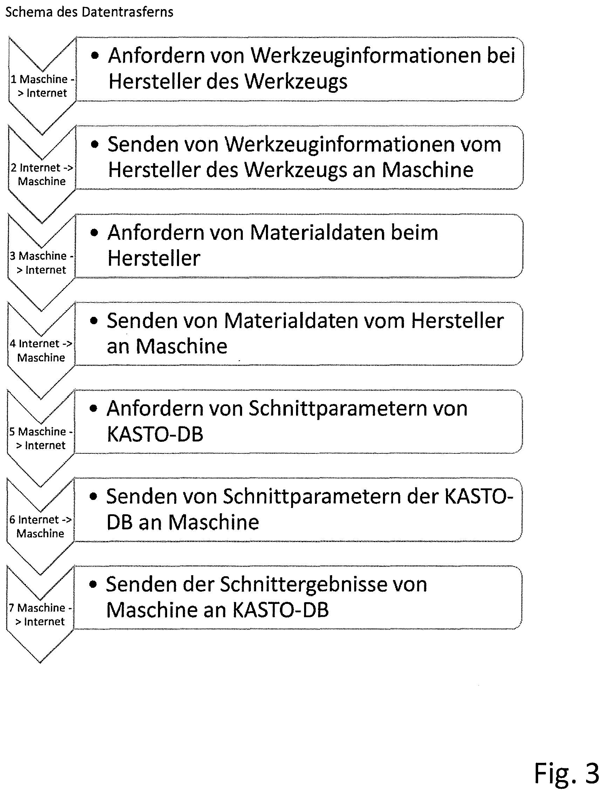

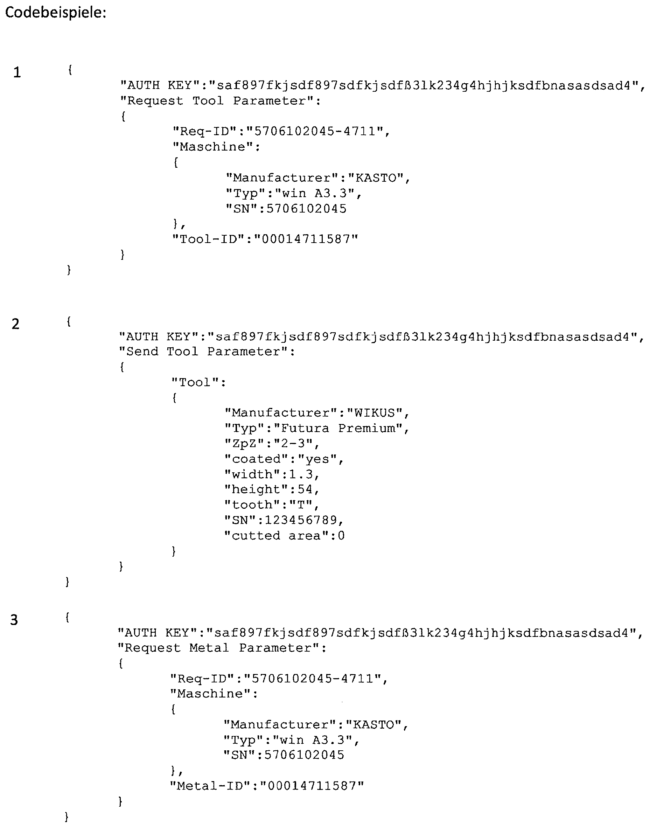

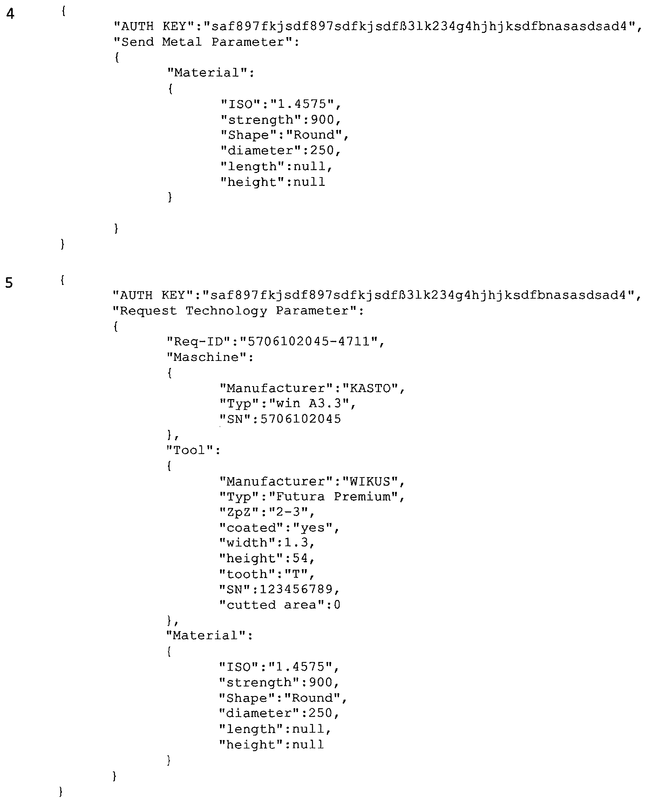

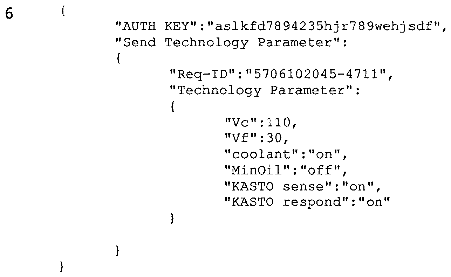

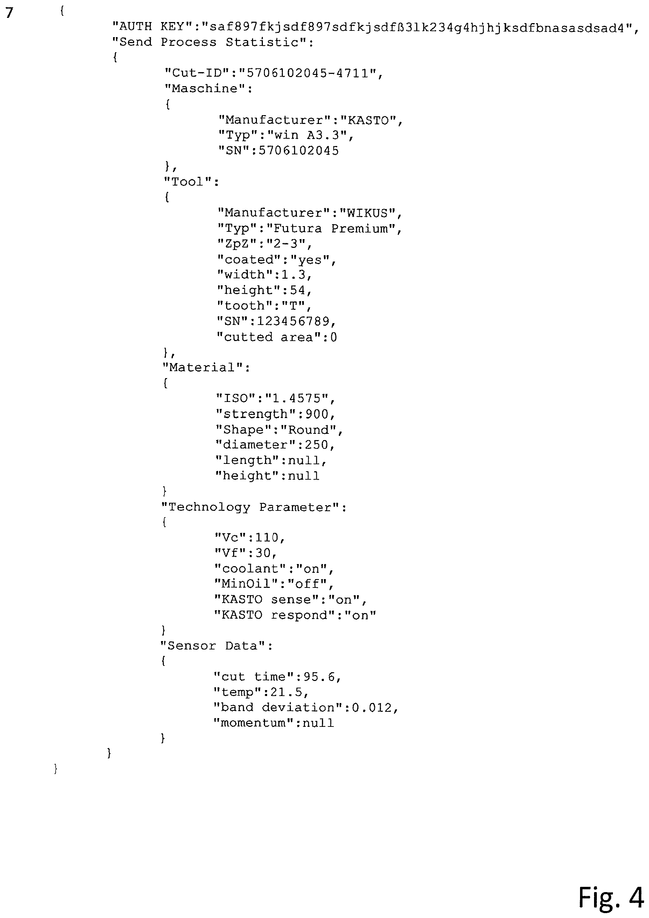

Figur 3 zeigt beispielhaft ein Schema des Datentransfers im System, das in Figur 1 dargestellt ist, wobei in Figur 4 für jeden Schritt 1 bis 7 des Datentransfers Codebeispiele dargestellt sind.

## Patentansprüche

1. System für einen optimierten Betrieb einer Werkzeugmaschine (1), insbesondere einer Sägemaschine, umfassend eine Werkzeugmaschine (1) mit einem Werkzeug (6) zur spanenden Metallbearbeitung, insbesondere einem Sägeband oder Sägeblatt, mit einer Antriebsvorrichtung (9, 13) zum Antreiben und/oder Bewegen des Werkzeugs (6), und mit einer Steuerungseinrichtung (17) für die Antriebsvorrichtung (9, 13), um die Antriebsvorrichtung (9, 13) mit einem Prozessdatensatz zu steuern und/oder zu regeln, weiterhin umfassend mindestens einen externen Computer (4) und/oder mindestens einen externen Datenspeicher (5) sowie eine Kommunikationseinrichtung (2) zum Datenaustausch zwischen der Steuerungseinrichtung (17) der Werkzeugmaschine (1) und dem externen Datenspeicher (5) und/oder dem externen Computer (4), wobei die Steuerungseinrichtung (17) Erkennungsmittel (18) zum Identifizieren des Werkzeugs (6) umfasst,
wobei die Steuerungseinrichtung (17) eine Abgleicheinheit (21) enthält, um im Datenspeicher (5) und/oder Computer (4) hinterlegte, werkzeugspezifische Prozessdatensatzvorgaben für das Werkzeug (6) abzurufen und/oder den aktuellen Prozessdatensatz mit im Datenspeicher (5) und/oder Computer (4) hinterlegten, werkzeugspezifischen Prozessdatensatzvorgaben für das Werkzeug (6) abzugleichen,
**dadurch gekennzeichnet,**
**dass** die Steuerungseinrichtung (17) und/oder der Datenspeicher (5) und/oder der externe Computer (4) maschinenspezifische Korrekturwerte für zumindest einzelne werkzeugspezifische Prozessdatensatzvorgaben enthält, um die werkzeugspezifischen Prozessdatensatzvorgaben an die Werkzeugmaschine (1) anzupassen,
und **dass** die Steuerungseinrichtung (17) der Werkzeugmaschine (1) einen Algorithmus enthält, der aus Prozessparametern, die mit Sensoren (19, 20) und/oder aus Rückmeldungen der Antriebsvorrichtung (9, 13) während des Betriebs der Werkzeugmaschine (1) ermittelt werden, und/oder aus Bedienereingaben maschinenspezifische und/oder materialspezifische Korrekturwerte für die werkzeugspezifischen Prozessdatensatzvorgaben ermittelt und mittels der Abgleicheinheit (21) an den externen Datenspeicher (5) und/oder den externen Computer (4) ausgibt, um die werkzeugspezifischen Prozessdatensatzvorgaben maschinenspezifisch zu modifizieren.

2. System nach Anspruch 1, wobei der Datenspeicher (5) und/oder Computer (4) einen Algorithmus enthalten, der aus Prozessparametern, die mit Sensoren (19, 20) und/oder aus Rückmeldungen der Antriebsvorrichtung (9, 13) während des Betriebs von der Steuerungseinrichtung (17) der Werkzeugmaschine (1) und/oder aus Bedienereingaben ermittelt und an den Datenspeicher (5) und/oder Computer (4) gemeldet werden, materialspezifische Korrekturwerte für die werkzeugspezifischen Prozessdatensatzvorgaben errechnet, um die werkzeugspezifischen Prozessdatensatzvorgaben maschinenspezifisch zu modifizieren.

3. System nach einem der Ansprüche 1 oder 2, wobei eine Mehrzahl von typgleichen Werkzeugmaschinen (1) mit ein und demselben externen Datenspeicher (5) und/oder externen Computer (4) kommunizieren, und wobei der Datenspeicher (5) und/oder Computer (4) so ausgebildet sind, dass sie die hinterlegten, werkzeugspezifischen Prozessdatensatzvorgaben anhand von den Werkzeugmaschinen (1) erhaltenen Rückmeldungen maschinenspezifisch anpassen, insbesondere unter Verwendung statistischer Methoden.

4. System nach Anspruch 3, wobei der externe Datenspeicher (5) die werkzeugspezifischen Prozessdatensatzvorgaben enthält, während der externe Computer (4) maschinenspezifische und/oder materialspezifische Korrekturwerte für die werkzeugspezifischen Prozessdatensatzvorgaben für die Abgleicheinheit (21) der Steuerungsvorrichtung (17) vorhält und anhand von den Werkzeugmaschinen (1) erhaltenen Rückmeldungen laufend maschinenspezifisch anpasst, insbesondere unter Verwendung statistischer Methoden.

5. System nach mindestens einem der Ansprüche 1 bis 3, wobei der Datenspeicher (5) und/oder Computer (4) einen Algorithmus enthalten, der aus Prozessparametern, die mit Sensoren (19, 20) und/oder aus Rückmeldungen der Antriebsvorrichtung (9, 13) während des Betriebs oder eines Probebetriebs von der Steuerungseinrichtung (17) der Werkzeugmaschine (1) ermittelt und an den Datenspeicher (5) und/oder Computer (4) gemeldet werden, auf das von der Werkzeugmaschine (1) zu bearbeitende Material schließt und die werkzeugspezifischen Prozessdatensatzvorgaben mit materialspezifischen Korrekturwerten anpasst.

## Claims

1. System for optimal operation of a machine tool (1), in particular a sawing machine, comprising a machine tool (1) with a tool (6) for metal cutting, in particular a saw band or saw blade, with a drive unit (9, 13) for driving and/or moving the tool (6), and with a control unit (17) for the drive unit (9, 13), to control and/or regulate the drive unit (9, 13) with a process data set, further comprising at least one external computer (4) and/or at least one external data storage device (5) as well as a communication device (2) for data exchange between the control unit (17) of the machine tool (1) and the external data storage device (5) and/or the external computer (4), wherein the control unit (17) comprises recognition means (18) for identifying the tool (6),
wherein the control unit (17) contains a matching unit (21) for downloading tool-specific process data set specifications for the tool (6) stored in the data storage device (5) and/or computer (4) and/or to match the current process data set with tool-specific process data set specifications for the tool (6) stored in the data storage device (5) and/or computer (4),
**characterised in**
**that** the control unit (17) and/or the data storage device (5) and/or the external computer (4) contains machine-specific correction values for at least individual tool-specific process data set specifications, to adapt the tool-specific process data set specifications to the machine tool (1),
and the control unit (17) of the machine tool (1) contains an algorithm, which determines, and outputs by means of the matching unit (21) to the external data storage device (5) and/or the external computer (4), machine-specific and/or material-specific correction values for the tool-specific process data set specifications from process parameters, which are determined with sensors (19, 20) and/or from feedback of the drive unit (9, 13) during operation of the machine tool (1), to modify the tool-specific process data set specifications in a machine-specific manner.

2. System according to claim 1, wherein the data storage device (5) and/or computer (4) contain an algorithm, which calculates material-specific correction values for the tool-specific process data set specifications from process parameters, which are determined with sensors (19, 20) and/or from feedback of the drive unit (9, 13) during operation by the control unit (17) of the machine tool (1) and/or from operator inputs and are transmitted to the data storage device (5) and/or computer (4), to modify the tool-specific process data set specifications in a machine-specific manner.

3. System according to any one of claims 1 or 2, wherein a plurality of machine tools (1) of the same type communicate with one and the same external data storage device (5) and/or external computer (4), and wherein the data storage device (5) and/or computer (4) are configured in such a way that they adapt in a machine-specific manner the stored, tool-specific process data set specifications on the basis of feedback received from the machine tools (1), in particular using statistical methods.

4. System according to claim 3, wherein the external data storage device (5) contains the tool-specific process data set specifications, while the external computer (4) holds, and continuously adapts in a machine-specific manner on the basis of feedback received from the machine tools (1), machine-specific and/or material-specific correction values for the tool-specific process data set specifications for the matching unit (21) of the control unit (17), in particular using statistical methods.

5. System according to at least one of claims 1 to 3, wherein the data storage device (5) and/or computer (4) contain an algorithm, which determines the material that is to be worked on by the machine tool (1) from process parameters, which are determined with sensors (19, 20) and/or from feedback of the drive unit (9, 13) during the operation or test operation by the control unit (17) of the machine tool (1) and are transmitted to the data storage device (5) and/or computer (4), and adapts the tool-specific process data set specifications with the material-specific correction values.

## Revendications

1. Système pour un fonctionnement optimisé d'une machine-outil (1), en particulier une machine à scier, comprenant une machine-outil (1) avec un outil (6) pour l'usinage métallique par enlèvement de copeaux, en particulier un ruban de scie ou une lame de scie, avec un dispositif d'entraînement (9, 13) pour l'entraînement et/ou le déplacement de l'outil (6), et avec un dispositif de commande (17) pour le dispositif d'entraînement (9, 13), afin de commander et/ou de réguler le dispositif d'entraînement (9, 13) avec un jeu de données de processus, comprenant en outre au moins un ordinateur (4) externe et/ou au moins un accumulateur de données (5) externe ainsi qu'un dispositif de communication (2) pour l'échange de données entre le dispositif de commande (17) de la machine-outil (1) et la mémoire de données (5) externe et/ou l'ordinateur (4) externe, dans lequel le dispositif de commande (17) comporte des moyens de reconnaissance (18) pour l'identification de l'outil (6),
dans lequel le dispositif de commande (17) contient une unité d'ajustage (21) afin d'appeler des spécifications de jeu de données de processus spécifiques à l'outil, enregistrées dans la mémoire de données (5) et/ou l'ordinateur (4) et/ou d'ajuster le jeu de données de processus actuel avec des spécifications de jeu de données de processus spécifiques à l'outil, enregistrées dans la mémoire de données (5) et/ou l'ordinateur (4) pour l'outil (6),
**caractérisé en ce**
**que** le dispositif de commande (17) et/ou la mémoire de données (5) et/ou l'ordinateur (4) externe contient des valeurs de correction spécifiques à la machine pour au moins des spécifications de jeu de données de processus spécifiques à l'outil individuelles afin d'adapter les prescriptions de jeu de données de processus spécifiques à l'outil à la machine-outil (1),
et **que** le dispositif de commande (17) de la machine-outil (1) contient un algorithme qui émet à partir de paramètres de processus qui sont déterminés avec des capteurs (19, 20) et/ou à partir de retours du dispositif d'entraînement (9, 13) pendant le fonctionnement de la machine-outil (1), et/ou à partir d'entrées utilisateur des valeurs de correction spécifiques à la machine et/ou spécifiques au matériau pour les spécifications de jeu de données de processus spécifiques à l'outil et au moyen de l'unité d'ajustage (21) à la mémoire de données (5) externe et/ou l'ordinateur (4) externe afin de modifier les spécifications de jeu de données de processus spécifiques à l'outil de manière spécifique à la machine.

2. Système selon la revendication 1, dans lequel la mémoire de données (5) et/ou l'ordinateur (4) contiennent un algorithme qui calcule à partir de paramètres de processus qui sont déterminés avec des capteurs (19, 20) et/ou à partir de retours du dispositif d'entraînement (9, 13) pendant le fonctionnement par le dispositif de commande (17) de la machine-outil (1), et/ou à partir d'entrées utilisateur et sont signalés à la mémoire de données (5) et/ou à l'ordinateur (4), des valeurs de correction spécifiques au matériau pour les spécifications de jeu de données de processus spécifiques à l'outil pour les spécifications de jeu de données de processus spécifiques à l'outil afin de modifier de manière spécifique à la machine les spécifications de jeu de données de processus spécifiques à l'outil.

3. Système selon l'une des revendications 1 ou 2, dans lequel une pluralité de machines-outils (1) de même type communique avec une même mémoire de données (5) externe et/ou ordinateur externe (4), et dans lequel la mémoire de données (5) et/ou l'ordinateur (4) sont réalisés de sorte qu'ils adaptent les spécifications de jeu de données de processus spécifiques à l'outil, enregistrées au moyen des retours reçus par les machines-outils (1) de manière spécifique à la machine, en particulier en utilisant des procédés statistiques.

4. Système selon la revendication 3, dans lequel la mémoire de données (5) externe contient les spécifications de jeu de données de processus spécifiques à l'outil alors que l'ordinateur (4) externe détient des valeurs de correction spécifiques à la machine et/ou spécifiques au matériau pour les spécifications de jeu de données de processus spécifiques à l'outil pour l'unité d'ajustage (21) du dispositif de commande (17) et les adapte au moyen de retours reçus par les machines-outils (1) de manière spécifique à la machine en continu, en particulier en utilisant des procédés statistiques.

5. Système selon au moins l'une des revendications 1 à 3, dans lequel la mémoire de données (5) et/ou l'ordinateur (4) contiennent un algorithme qui déduit à partir de paramètres de processus qui sont déterminés avec des capteurs (19, 20) et/ou à partir de retours du dispositif d'entraînement (9, 13) pendant le fonctionnement ou un fonctionnement test du dispositif de commande (17) de la machine-outil (1) et sont signalés à la mémoire de données (5) et/ou l'ordinateur (4), le matériau à usiner par la machine-outil (1) et adapte les spécifications de jeu de données de processus spécifiques à l'outil avec des valeurs de correction spécifiques au matériau.
